# EUROPEAN PATENT APPLICATION

(11) **EP 2 698 313 A2**
(43) Date of publication of application: **19.02.2014**
(21) Application number: 13003781.5
(22) Date of filing: 30.07.2013
(51) Int. Cl.: B63C 9/115

(54) **Swimming vest for dogs**

(30) Priority: 13.08.2012 HU 1200162
(71) Applicant: Sebö, Gyula, 2310 Szigetszentmiklos (HU)
(72) Inventor: Sebö, Gyula, 2310 Szigetszentmiklos (HU)
(74) Representative: Emri, Jozsefné

(57) **Abstract**

The object of the invention is a swimming vest for dogs comprising an outer covering, at least one swimming pad (8) placed into an openable pocket portion (9), an inner covering, and a strap closing element (4) enclosing the body of the dog, these together forming a blanket (7), close-fitting on the body of the dog like a diving suit, which allows the water training, rehabilitation treatment of dogs unable to swim due to bodily injury or breed characteristics, and can also be used as a life vest.

## Description

The object of the invention is a swimming vest for dogs comprising an outer covering, at least one swimming pad placed into an openable pocket portion, an inner covering, and a strap closing element enclosing the body of the dog, these together forming a blanket, close-fitting on the body of the dog like a diving suit, which allows the water training, rehabilitation treatment of dogs unable to swim due to bodily injury or breed characteristics, and can also be used as a life vest.

By nature, dogs are born for action. Many pure and mixed breed dogs suffer from a young age from musculoskeletal, primarily spinal and extremity joint problems that can be treated only with costly and risky operations. The disease itself, and the postoperative treatment is extremely stressful for the dog, and in both cases the maintenance and building of muscles surrounding the abnormal bones and joints is indispensable. One method for this, perhaps the best, is water exercising, swimming known from the field of human medicine, which is a proven method in the case of dogs as well. This therapy is also highly recommended as prevention for dog breeds which due to their short legs are unable to stay on the surface of the water for a longer time.

In the prior art document No. US 2008/0227346 A1 discloses a canine swim safe vest which is robust similarly to the life vests made for humans, comprising a closed cell, most preferably polyethylene foam sheet covered with a thin, synthetic-based fabric. This foam sheet significantly lighter than water is dimensioned in such a way that the whole body weight of the dog is kept on the surface of the water. Thus these vests are not suitable for swimming teaching and training, as they do not direct the animal towards the correct movement, because the used closed cell foam sheet is overdimensioned, thick, and hinders the movement of the dog on land.

The life and/or swimming vest generally known in the prior art is equipped with a cover having an outer surface made of a synthetic-based fabric, a polyester or polyamide clothing and/or bag fabric lighter than 250g/sqm, the inner surface of which is not fixed or only in places to at least one closed cell foam sheet. The synthetic-based fabric and the closed cell foam sheet are placed in a blanketing saddle part as separate layers, and the synthetic-based fabric does not have a neoprene foam structure that would help to keep the body on the surface of the water in addition to the closed cell foam sheet. The closed cell foam sheet is fixed in an unreleasable manner, covered by the synthetic-based fabric. Only the closed cell foam sheet plays a part in keeping the body of the dog on the surface of the water, which gives the garment a rigid feel.

The swimming vest closest to this invention is disclosed in Utility Model No. HU U11 00227, wherein at least 40% of the surface area of the blanket enclosing the body of the dog is made of neoprene, furthermore on the blanket, at least on the back portion of the blanket there is a pocket portion, into which a closed cell foam sheet is placed.
The disadvantage of the utility model is that the blanket is not fastened with a strap closing element. Thereby the blanket is not securely fixed.

In the prior art there is no solution providing an elastic vest that allows the fixing of at least one swimming pad, preferably a closed cell foam sheet in a releasable manner in a pocket portion designed especially for this purpose, and the fastening of the blanket with a strap closing element.

With this invention the task is to make possible a reduction in the thickness and size of the swimming pads, and the targeted positioning of the swimming pads to support certain parts of the body, by using pocket portions. A strap closing element allows the safe lifting of heavier dogs from the water by grabbing the blanket.

The set objective, in addition to fixing the swimming pads in a releasable manner, is to equip the blanket with at least one strap closing element enclosing the full or partial cross-section of the blanket. A handle optimized for balance is also important for lifting, for grabbing the blanket. A leash ring is also justified for leading on a leash (swimming teaching).

Thus invention relates to a swimming vest for dogs comprising an outer covering forming a blanket, at least one pocket portion, at least one swimming pad placed into the pocket portion, and an inner covering it at least partially.

The essence of the development is that the blanket is equipped with at least one strap closing element enclosing the body of the dog, with adjustable length, furthermore at least one swimming pad is placed into a pocket portion in a releasable manner.
Preferably, the blanket has a handle.
A leash ring is fixed on the blanket.

The preferred embodiments of the swimming vest are illustrated in the following figures:
- Figure 1 shows a lateral-top view of the swimming vest with open or semi-closed pocket portions.
- Figure 2 shows the A-A cross-section of the strap closing element and the pocket portions in a preferred embodiment.

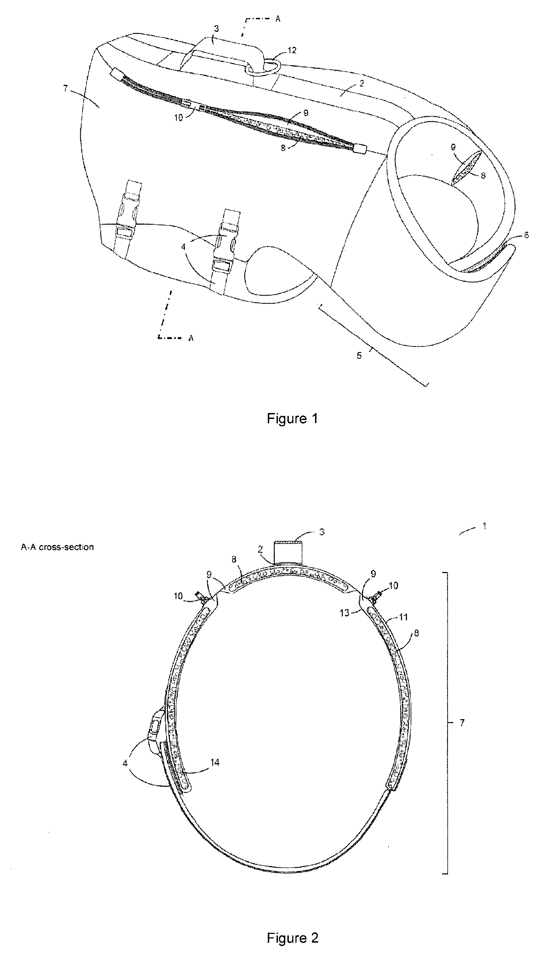

Figure 1 shows a lateral-top view of the swimming vest **1.** A back strap **2** is fixed longitudinally on the blanket **7,** on which there is a handle **3** and a leash ring **12.** Preferably the **3** handle is a strap, fixed on the blanket **7** by sewing. Most preferably the leash ring **12** is pulled on the handle **3,** or fixed directly under it. On the blanket **7,** most preferably perpendicularly to the back strap **2,** there is at least one, but optimally 2-3 closing elements **4,** which in the given embodiment do not extend to the back strap **2.** On the side of the blanket **7** there is a pocket portion **9** equipped with a pocket portion closing element **10,** with a swimming pad **8** placed into it in a releasable manner, which is a closed cell foam sheet. The blanket **7** has a collar part **5** releasable and adjustable by means of a collar part closing element **6.** The collar part closing element **6** is preferably a hook-and-loop fastener **14.** In the given case the pocket portion **9** in the collar part **5** is not equipped with a pocket portion closing element **10.**

Figure 2 shows the A-A cross-section of the blanket **7** of the swimming vest **1.** A back strap **2** is fixed on the upper part of the blanket **7** under a handle **3.** In the given case the back strap **2** and the handle **3** are fixed on the outer covering **11** by sewing. The pocket portions **9** are covered by an inner covering **13.** Preferably the outer covering **11** is polyester, while the inner covering **13** is made of a combination of natural and synthetic fibres. Swimming pads **8** are placed into the pocket portions **9** on the sides and upper part of the blanket **7** in a releasable manner. The pocket portions **9** are closed with pocket portion closing elements **10.** Preferably the closing element **4** is a strap ending in a plastic buckle, running at least between the sides of the blanket **7** opposite to the back strap **2.** The adjustable closing of the blanket **7** is ensured by the closing element **4** and a hook-and-loop fastener **14** simultaneously.

The swimming vest, thanks to the openable pocket portions, is an ideal sports and life saving equipment at the same time, as the amount, size of the swimming pads can be changed. The strap closing element for closing the blanket is decisive, as it allows grabbing and lifting the whole weight of the dog during life saving or training. When closed, it encloses the openable pocket portions as well, preventing the displacement of the swimming pad(s).

### List of reference numbers

- 1): swimming vest
- 2): back strap
- 3): handle
- 4): closing element
- 5): collar part
- 6): collar part closing element
- 7): blanket
- 8): swimming pad
- 9): pocket portion
- 10): pocket portion closing element
- 11): outer covering
- 12): leash ring
- 13): inner covering
- 14): hook-and-loop fastener

## Claims

1. A swimming vest for dogs comprising an outer covering forming a blanket, at least one pocket portion, at least one swimming pad placed into the pocket portion, and an inner covering it at least partially, **characterized in that** the blanket **(7)** is equipped with at least one strap closing element **(4)** enclosing the body of the dog, with adjustable length, furthermore at least one swimming pad **(8)** is placed into a pocket portion **(9)** in a releasable manner.

2. The swimming vest for dogs **(1)** according to claim 1, **characterized in that** the blanket **(7)** has a handle **(3).**

3. The swimming vest for dogs **(1)** according to claims 1-2, **characterized in that** a leash ring **(12)** is fixed on the blanket **(7).**
